# EUROPEAN PATENT SPECIFICATION

(11) **EP 2 740 559 B1**
(45) Date of publication and mention of the grant of the patent: **09.11.2016**
(21) Application number: 13192910.1
(22) Date of filing: 14.11.2013
(51) Int. Cl.: B23K 11/00, B21F 23/00, B21F 27/10, B21F 27/20

(54) **AUTOMATIC MACHINE FOR THE PRODUCTION OF ELECTRO-WELDED MESHES**
AUTOMATISCHE ELEKTROSCHWEISSMASCHINE FÜR DIE HERSTELLUNG VON GITTERN
MACHINE AUTOMATIQUE POUR LA PRODUCTION DE MAILLES ÉLECTRO-SOUDÉES

(30) Priority: 06.12.2012 IT PN20120073
(43) Date of publication of application: 11.06.2014
(73) Proprietor: A.W.M. S.p.A., 33010 Magnano in Riviera (Udine) (IT)
(72) Inventor: Bernardinis, Claudio, 33010 Magnano in Riviera (UD) (IT)
(74) Representative: Giugni, Valter

(56) References cited:
- US-A1- 2003 201 149
- US-A1- 2005 247 368
- US-A1- 2012 103 460

## Description

### FIELD OF APPLICATION

The present invention is relative to an automatic machine for the production of electro-welded meshes, which includes innovative mechanisms for feeding and positioning the transversal wires, said meshes being usable particularly in the production of prefabricated reinforced concrete components.

### PRIOR ART

The modern building industry resorts increasingly to the prefabrication of preformed reinforced concrete components. Electro-welded meshes are basic elements for the production of said preformed components.

Compliance with the standards of quality and safety of the finished products must not be at the expense of economy and production times.

The complexity of the procedure is the limit that imposes a balance between production speed and a guarantee of the quality of production.

The prior art proposes machines of semiautomatic type, which require an additional phase carried out by means of devices known as wire straighteners for the preparation of the cut-to-length transversal wires; these transversal wires are held in hoppers positioned above the running deck of the longitudinal wires or laterally to it.

More advantageous are the machines of automatic type, in which the steel wires are unwound from coils and fed in a continuous mode; the transversal wires are cut to length and brought to the welding positions. For example, in patent EP 0482842, the longitudinal wires and the transversal wires are fed one at a time and are positioned by means of an arm rotating around a vertical axis. This solution is thus uneconomic and not very rational, as it requires long operating times. Patent application EP 2433724, filed by the present applicant, uses, as in the above-mentioned patent a feeding arm rotating around a vertical axis, but the arm is provided with a plurality of wire-holding stations, each provided with a plurality of automatic grippers, and collaborates with a plurality of parallel conveyors that feed the wires into the wire-cutting device. This is a more efficient solution than is the case with the above-mentioned patent, but it is mechanically more complicated.

The characteristic shared by both classes of devices found on the market is the necessity of waiting for the completion of the welding phase of a rod before starting the insertion of the next transversal wire.

The technical solution adopted by the invention described hereunder involves the innovative use of mechanical components for loading, positioning and holding in place the elements that form the grid of the electro-welded mesh, achieving at the same time the advantage of a faster, continuous and uniform process.

### SUMMARY OF THE INVENTION

The main objective of the invention is to provide an automatic machine for the production of electro-welded wire meshes that overcomes the limits of the prior art by achieving a technical solution that, relying on the physical dynamics resulting from the application of helical gear mechanisms, makes it possible to increase the production speed while maintaining the quality standard of the finished product.

The characteristics of the machine that is the subject matter of the present invention will be defined in the claims attached at the end of the following specification.

### DESCRIPTION OF THE DRAWINGS

The objectives and characteristics of the invention will become evident from the description which follows with reference, by way of example and without limitations, to the enclosed drawings, wherein:
- figures 1 and 2 illustrate, respectively, a side view and a front view of an example of the machine;
- figures 3 and 4 illustrate, respectively, a side view and a front view of an example of the machine, in which in bolder lines are shown the devices involved in the feeding phase of the transversal wire while the arrows show their movement as driven by the actuators;
- figures 5 and 6 illustrate, respectively, a side view and a front view of an example of the machine, in which in bolder lines are shown the devices involved in the transportation of the transversal wires from the cutting point to the welding point;
- figures 7 and 8 illustrate two side views of an example of the machine. In the sections in detail of figure 7 are shown the details of the passage of the transversal wire from the seats of the openable holding guides 5 to the first groove of the feeding and abutting screws 7 thanks to the action of the discharge disks 6, while in the sections in detail B of figure 8 is shown the action of the toe 13 of the locking element which stops the transversal wire for the time necessary for welding;
- figure 9 is a front view of the machine subject matter of the invention in which the arrows show the directional movement of the welding heads driven by the respective actuators.

### DETAILED DESCRIPTION OF THE INVENTION

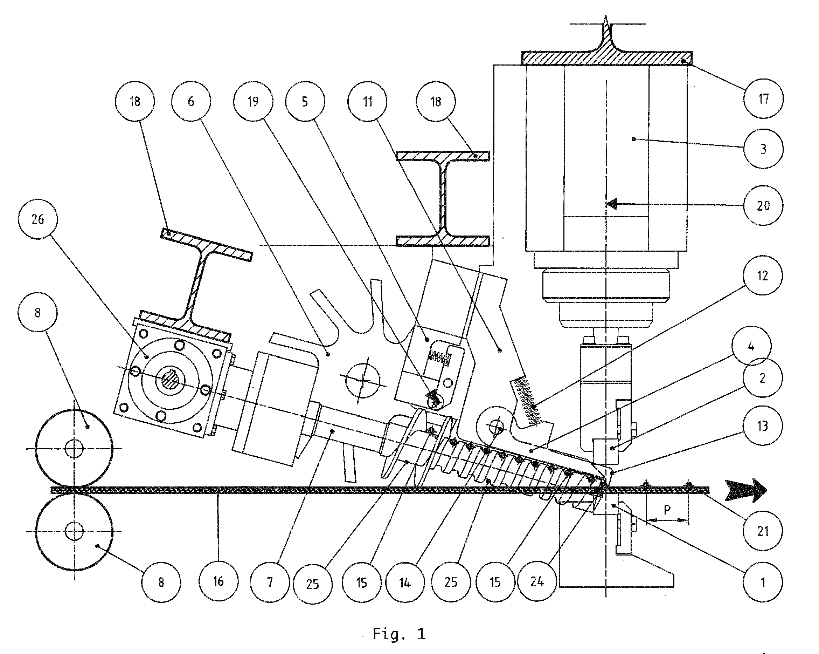

The structure of a machine for the production of electro-welded wire meshes according to the present invention is illustrated in a side view in figure 1. The numerical references 1, 2 and 3 identify the components used for welding the transversal wires 15 ("*feeding*") to the longitudinal wires 16 ("*mounting frame*"), in which 1 indicates the lower welding electrode, 2 the upper one and 3 the welding actuator which, in turn, is fastened to the welding actuators support structure 17. The longitudinal wire feeding rollers 8 are the actuators that, after the welding of a transversal wire 15 is performed, cyclically feed by one step P the longitudinal wires 16 and, consequently, the formed mesh 21 present beyond the welding axis 20.

The other set of mechanisms shown in figure 1 is designed to correctly position the transversal wires 15 to allow welding to be carried out. The set consists of a feeding and abutting worm screw 7 connected to the actuator 26 supported by the frame that holds the transversal feeding units 18. The feeding and abutting worm screws 7 rotate at a constant speed during a complete machine cycle equal to a 360° revolution, which corresponds to the interval between two successive welding operations. The openable holding guides 5 are arranged in line with the transversal wire feeding axis 19 and hold the transversal wire 15 for the time necessary for it to be inserted, after which the shear 9 is operated and the coordinated movement of the discharge disks 6 allows the transversal wire 15 to fall into the helical grooves 25 of the feeding and abutting worm screw 7. Said openable holding guides 5 are normally kept in a closed position by a spring and are opened by the thrust exerted by the discharge disks 6 through the transversal wire 15.

During their feeding movement, the transversal wires 15 are held in the helical grooves 25 of the feeding and abutting worm screw 7 by the transversal wire guiding and locking elements 4 fastened to the supports 11 for the wire locking elements through the hinge pin 14 and operated by the locking element return spring 12. The transversal wire guiding and locking elements 4 end with a toe 13 of the locking element, which is shaped in such a way as to hold the transversal wires 15 between the shaped head 23 of the feeding and abutting worm screw 7 and the longitudinal wire 16.

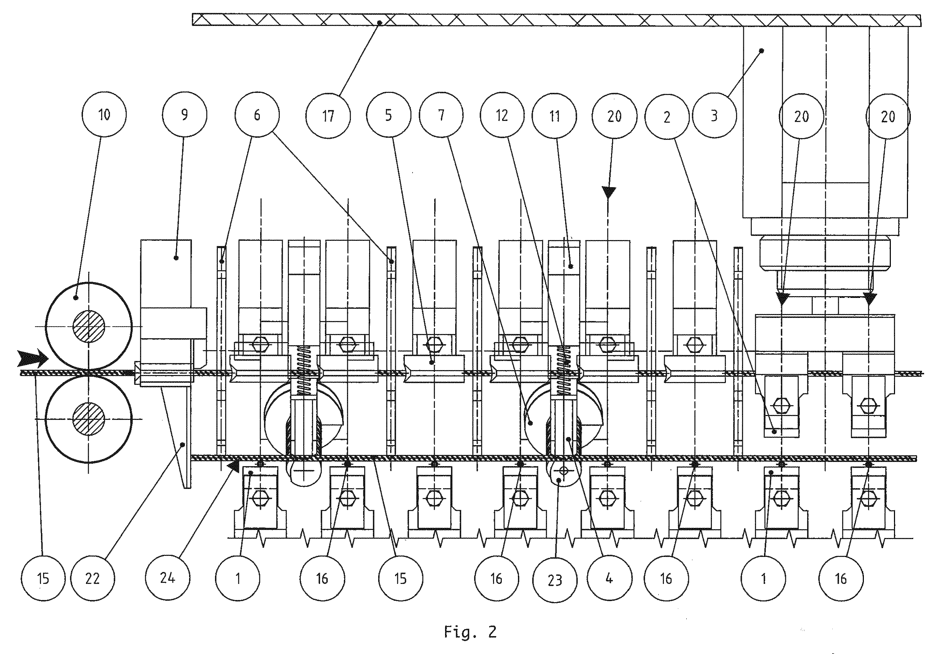

Figure 2 is a front view of the machine illustrated in figure 1. In addition to the above-described elements are also visible the transversal wire feeding rollers 10 that insert the transversal wire 15 into the openable holding guides 5 as soon as these guides are freed of the previous wires by the action of the discharge disks 6.

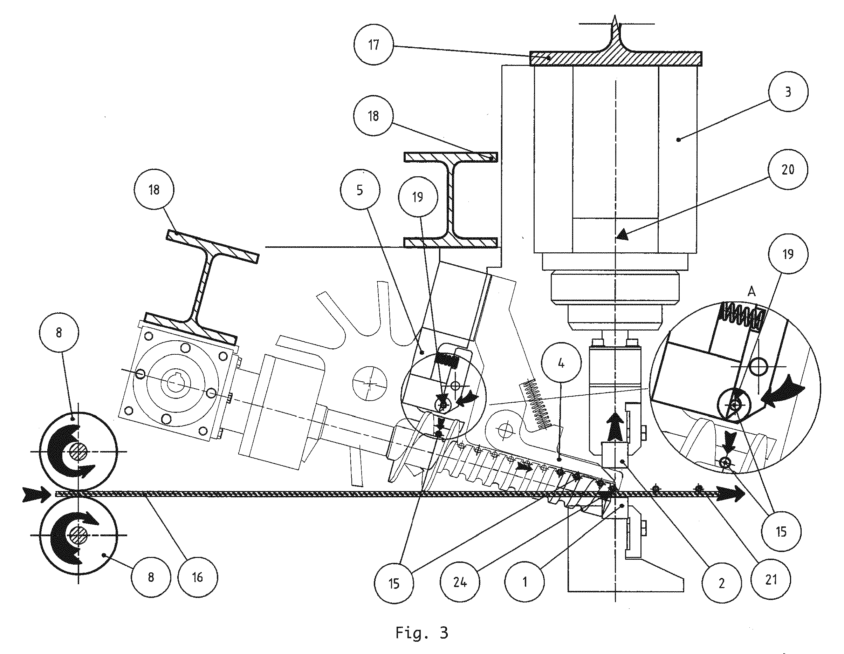

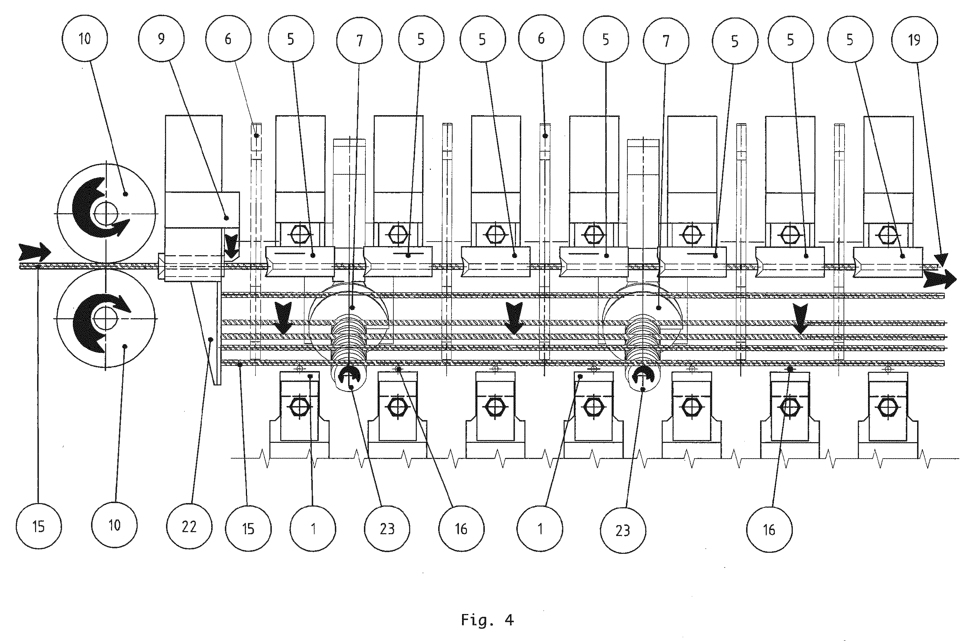

Figures 3 and 4 illustrate the operations of inserting and feeding the transversal wires 15.

To enable the machine to achieve its objective, which is to increase the speed of production of panels of electro-welded mesh, a series of longitudinal wire feeding rollers 8, connected mechanically to each other, feeds all the longitudinal wires 16 and the part of the mesh that is already formed 21. The movement is carried out in cyclic phases and is synchronized with the operation of the rollers 10 for inserting the transversal wire 15 along the axis 19 of the openable guides 5 holding the transversal wire.

Said guides 5 are openable downward and hold the transversal wire 15 until the completion of the feeding cycle, as shown in the detail A in figure 3, when the shear 9 cuts the transversal wire 15 at the required length.

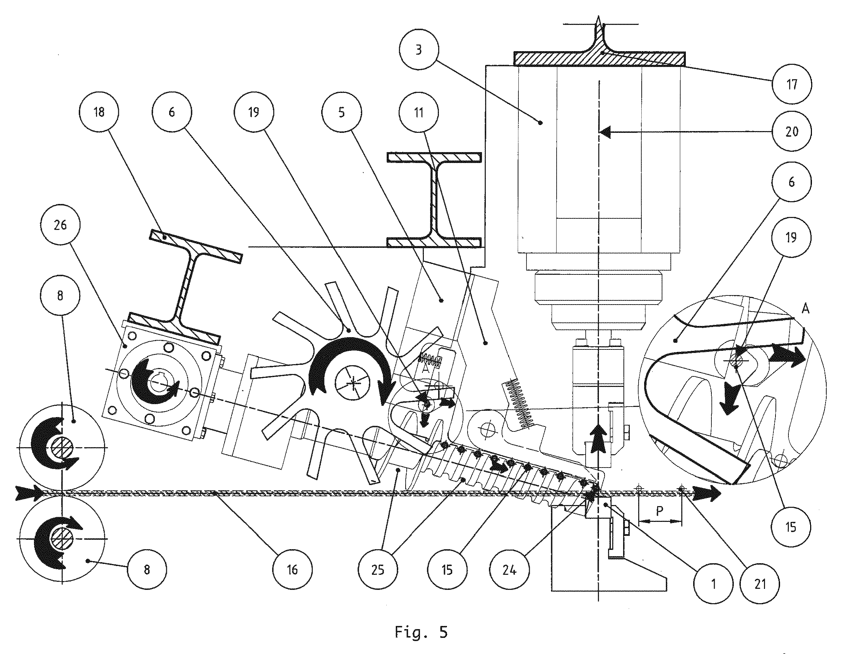

After the shear 9 performs the cut, the discharge disks 6 perform, as shown in figure 5, and in particular in the detail A, a quick rotation to free with their arms the transversal wire 15 restrained by the openable holding guides 5 and accompany it inside the helical groove 25 of the feeding and abutting screw 7, which, meanwhile, is freed of the previous transversal wire 15 thanks to the rotation of the worm screw.

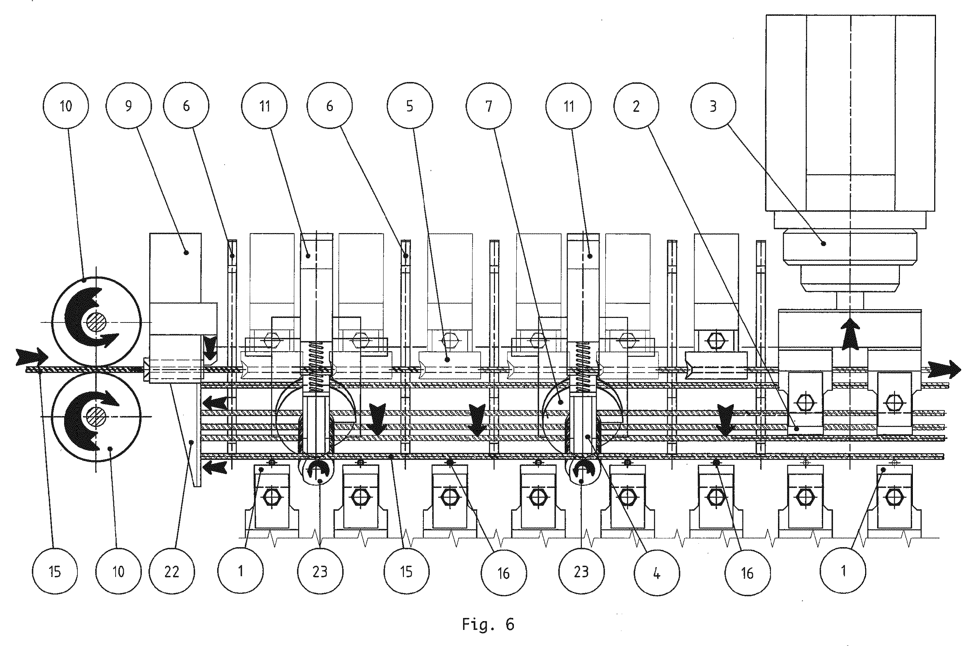

The arrows in figure 6 show both the rotation of the rollers 10 feeding the transversal wire 15 and the composite movement transmitted by the rotation of the feeding and abutting worm screws 7 to the transversal wires 15 that descend and approach the longitudinal wires 15. This composite movement also causes the feeding of the wires 15 (toward the left in the figure) so as to abut them against the transversal abutting plate 22, thus guaranteeing their perfect alignment.

The angle of rotation that the discharge disks 6 cover with each actuation is in relation to the number of grooves or races present on their surface, and the actuator that provides said rotation can be, alternatively, either mechanically connected to the drive unit of the feeding and abutting worm screws 7 through an oscillator or a Maltese cross or other mechanism suitable for the purpose, or controlled independently through an electrical, pneumatic, hydraulic or other type of drive unit.

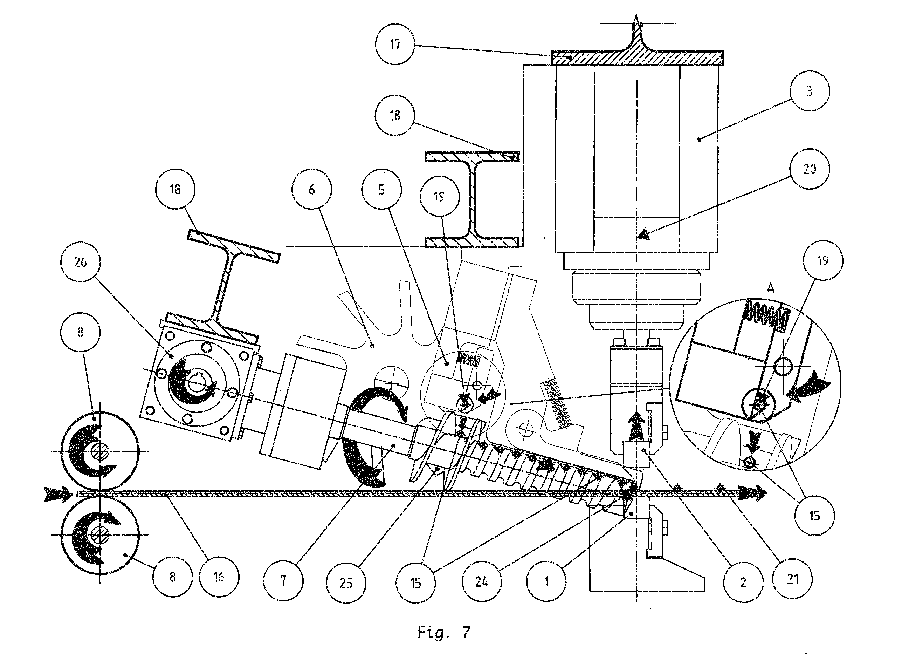

The image in figure 7 shows that the rotation of the feeding and abutting worm screw 7 causes the transversal wires 15 to move toward the intersection between the vertical welding axis 20 and the horizontal welding axis 24, at which point they will be welded by the action of the welding electrodes 1 and 2. The feeding of the transversal wires 15 is not carried out at a uniform speed but varies on the basis of the different pitch of the helix 25 formed on the feeding and abutting worm screw 7 so that it is faster in the first and in the last section and slower in the central one. The design of the helix 25 is therefore high and wide in the initial wire feeding part to allow space for the transversal wire 15 feeding system, low and narrow in the central part, and low and wide in the end part to accommodate the welding electrodes 1 and 2. The rotation of the feeding and abutting worm screws 7 is connected, either mechanically or through an angular transducer or other mechanism suitable for the purpose, to the other mechanical parts. A complete mechanical cycle takes place every 360° of revolution of the feeding and abutting worm screws 7.

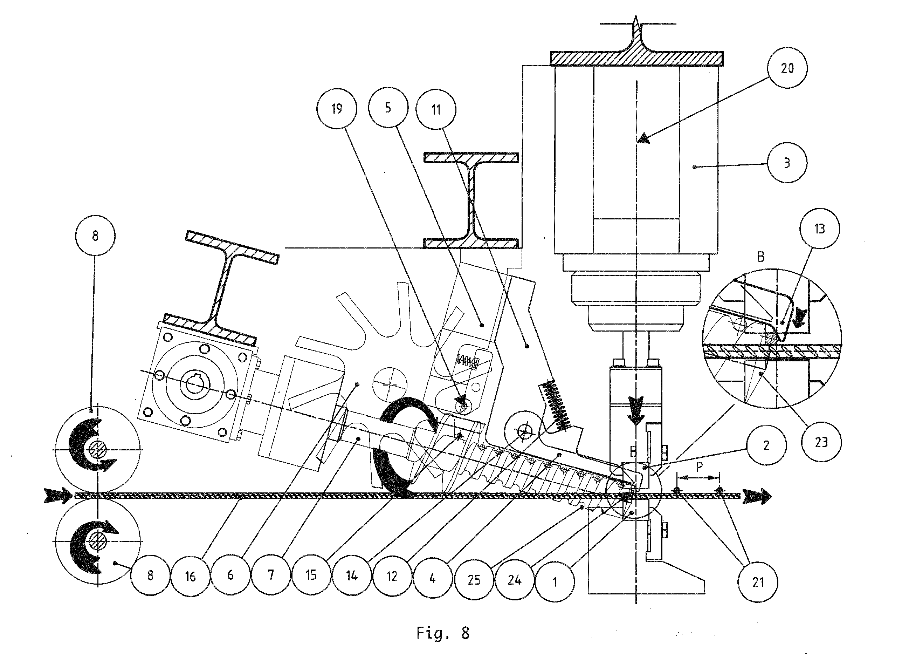

Figure 8 illustrates the action of the supports 11 for the wire locking elements to which, through the hinge pins 14, are connected the wire guiding and locking elements 4, which, opposing the helical groove 25 of the feeding and abutting worm screws 7, guide the transversal wires 15 and prevent them from getting out of the helical grooves 25 and from becoming tangled. Each of the guiding and locking elements 4 ends with a toe 13 of the locking element, shown in the detail B of figure 8, which stops the transversal wire 15 at the exit end of the helical groove 25, locking it between the head 23 of the feeding and abutting worm screw 7 and the plane that coincides with the upper surface of the longitudinal wires 16 placed above the welding electrodes 1.

The feeding and abutting worm screws 7 rotate at a constant speed, without the need to stop the movement when the transversal wire 15 leaves the helical groove 25. The design of the shaped heads 23, shown in the detail B, together with the action of the toe ands 13 of the locking element enables the machine to keep the transversal wire 15 in in a position coinciding with the vertical welding axis 20 for the time necessary for welding without having to vary the speed of revolution of the feeding and abutting worm screws 7. This result makes it possible to eliminate the jogging feeding movement of the longitudinal wires and of the formed mesh, thus relieving the mechanical stress on the operating structures and extending the useful life of the machine.

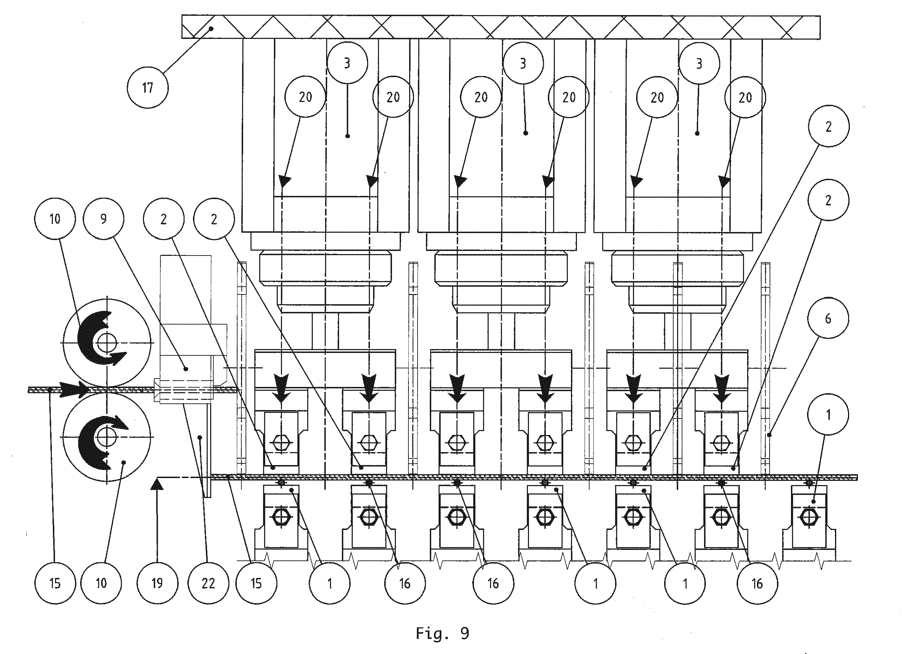

When the transversal wire 15 reaches this position, the welding actuators 3 are operated so as to apply through the upper electrodes 2 a pressure on the contact points between the transversal wire 15 and the longitudinal wires 16. The combination of three factors: the pressure applied, shown by the arrows in figure 9; the amount of electrical current passing between the electrodes 1 and 2, and the duration of application of the current determines the almost instantaneous fusion of the metal in said contact points.

At the completion of a welding cycle, the welding actuators 3 bring the upper electrodes 2 back to the idle position and a new operating cycle is started.

## Claims

1. Automatic machine for the production of electro-welded mesh formed from metal wires, comprising a unit for feeding longitudinal wires (16) and a unit for feeding transversal wires (15), a transversal wire (15) cutting device and a plurality of welding units (1-3), **characterized in that**
the transversal wire (15) feeding unit includes an actuator (26) and at least one motorized worm screw (7) which in operation is able to rotate at a constant speed about its own axis and perform one complete revolution during one machine cycle equal to the interval between one weld and the next, said worm screw is connected to the actuator (26) which is supported by a frame (18) of the machine, said worm screw is installed parallel to the feeding direction of the longitudinal wires (16) and is inclined on a vertical plane, and said worm screw (7) is provided with a variable pitch thread or helical groove (25), and is able to be charged with a single transversal wire (15) for each groove (25).

2. Automatic machine for the production of electro-welded wire mesh according to claim 1, **characterized in that**
the thread or helical groove (25) of each worm screw (7) is high and wide in the initial wire feeding part, low and narrow in the intermediate wire transition part, and it is low and wide in the end part, where the wires are welded, such that in operation at a constant rotating speed the feeding speed of the transversal wires is faster in the first and in the last section and slower in the central one.

3. Automatic machine for the production of electro-welded wire mesh according to claim 2, **characterized in that**
the machine comprises at least one locking element and each worm screw (7) is suitable to operate, in its end part, with a locking element (4) for guiding and locking the transversal wires (15) in the welding position by means of a toe element (13), the locking element (4) being hinged on a support (11) on the machine and connected to said support (11) through a spring (12).

4. Automatic machine for the production of electro-welded wire mesh according to claim 3, **characterized in that**
the unit feeding the transversal wires (15) comprises wire feeding rollers (10) that cooperate with the wire holding guides (5) and wire discharge disks (6), said guides (5) being suitable to open for feeding the wires and for their being discharged by means of the disks (6) onto the respective underlying worm screw (7).

5. Automatic machine for the production of electro-welded wire mesh according to claim 4, **characterized in that**
between the unit feeding the transversal wires (15) and the discharge disks (6) is installed a cutting device (9) suitable for cutting to length the transversal wires (15) that are pushed by the worm screw (7) against an abutting plate (22) of the machine for aligning said transversal wires.

## Patentansprüche

1. Automatische Elektroschweißanlage für die Herstellung von Gittern, die aus Metalldrähten gebildet sind, mit einer Einheit zur Zuführung von Längsdrähten (16) und einer Einheit zur Zuführung von Querdrähten (15), einer Querdraht-(15) Schneideeinrichtung und mehreren Schweißeinheiten (1-3), **dadurch gekennzeichnet, dass**
die Querdraht-(15) Zuführeinheit einen Aktuator (26) und mindestens eine motorisierte Schnekkenschraube (7) aufweist, die bei Betrieb ausgebildet ist, sich mit einer konstanten Geschwindigkeit um ihre eigene Achse zu drehen und während eines Maschinenzyklus, der gleich dem Intervall zwischen einer Schweißung und der nächsten ist, eine vollständige Umdrehung auszuführen, wobei die Schneckenschraube mit dem Aktuator (26) verbunden ist, der von einem Rahmen (18) der Anlage gehalten wird, wobei die Schneckenschraube parallel zu der Zuführrichtung der Längsdrähte (16) montiert und in einer vertikalen Ebene geneigt ist, und wobei die Schneckenschraube (7) mit einem Gewinde oder einer spiralförmigen Nut (25) mit variabler Steigung versehen und ausgebildet ist, mit einem einzigen Querdraht (15) für jede Nut (25) beschickt zu werden.

2. Automatische Elektroschweißanlage für die Herstellung von Gittern nach Anspruch 1, **dadurch gekennzeichnet, dass**
das Gewinde oder die spiralförmige Nut (25) jeder Schneckenschraube (7) am Anfang des Drahtzuführteils hoch und breit ist, in dem Zwischendrahtübergangsteil niedrig und schmal ist und in dem Endteil, in welchem die Drähte geschweißt werden, niedrig und breit ist, so dass während des Betriebs mit konstanter Drehgeschwindigkeit die Zuführungsgeschwindigkeit der Querdrähte in dem ersten und in dem letzten Abschnitt höher und in dem zentralen Abschnitt niedriger ist.

3. Automatische Elektroschweißanlage für die Herstellung von Gittern nach Anspruch 2, **dadurch gekennzeichnet, dass**
die Anlage mindestens ein Verriegelungselement aufweist und jede Schneckenschraube (7) geeignet ist, an ihrem Endteil mit einem Verriegelungselement (4) die Querdrähte (15) in der Schweißposition mittels eines Zapfenelements (13) zu führen und zu arretieren, wobei das Verriegelungselement (4) an einer Halterung (11) an der Anlage gelenkig angebracht und mit der Halterung (11) über eine Feder (12) verbunden ist.

4. Automatische Elektroschweißanlage für die Herstellung von Gittern nach Anspruch 3, **dadurch gekennzeichnet, dass**
die Einheit, die die Querdrähte (15) zuführt, Drahtzuführungswalzen (10) umfasst, die mit Drahthalterführungen (5) und Drahtauswurfscheiben (6) zusammenwirken, wobei die Führungen (5) geeignet sind, sich zur Zuführung der Drähte und zu deren Auswerfen mittels der Scheiben (6) auf die jeweilige darunterliegende Schneckenschraube (7) zu öffnen.

5. Automatische Elektroschweißanlage für die Herstellung von Gittern nach Anspruch 4, **dadurch gekennzeichnet, dass**
zwischen der Einheit, die die Querdrähte (15) zuführt, und den Auswurfscheiben (6) eine Schneideeinrichtung (9) montiert ist, die ausgebildet ist, die Querdrähte (15), die von der Schneckenschraube (7) gegen eine Anschlagsplatte (22) der Anlage zum Ausrichten der Querdrähte gedrückt werden, in der Länge zuzuschneiden.

## Revendications

1. Machine automatique pour la fabrication de mailles électro-soudées formées de fils métalliques, comprenant une unité d'alimentation en fils longitudinaux (16) et une unité d'alimentation en fils transversaux (15), un dispositif de coupe de fil transversal (15) et une pluralité d'unités de soudage (1-3), **caractérisée en ce que**
l'unité d'alimentation en fil transversal (15) comporte un actionneur (26) et au moins une vis sans fin (7) motorisée qui en fonctionnement est capable de tourner à une vitesse constante autour de son propre axe et d'exécuter une rotation complète pendant un cycle de machine égale à l'intervalle entre une soudure et la suivante, ladite vis sans fin est connectée à l'actionneur (26) qui est supporté par un châssis (18) de la machine, ladite vis sans fin est installée parallèlement à la direction d'alimentation des fils longitudinaux (16) et est inclinée sur un plan vertical, et ladite vis sans fin (7) est pourvue d'un filetage à pas variable ou d'une rainure hélicoïdale (25), et est capable d'être chargée avec un seul fil transversal (15) pour chaque rainure (25).

2. Machine automatique pour la production de mailles métalliques électro-soudées selon la revendication 1, **caractérisée en ce que**
le filetage ou la rainure hélicoïdale (25) de chaque vis sans fin (7) est haute et large dans la partie initiale de fil d'alimentation, basse et étroite dans la partie intermédiaire de transition de fil, et il est bas et large dans la partie terminale, où les fils sont soudés, de sorte qu'en fonctionnement à une vitesse de rotation constante la vitesse d'alimentation de fils transversaux est plus rapide dans la première et la dernière section et est plus lente dans la section centrale.

3. Machine automatique pour la fabrication de mailles métalliques électro-soudées selon la revendication 2, **caractérisée en ce que**
la machine comprend au moins un élément de verrouillage et chaque vis sans fin (7) est adaptée pour fonctionner, dans sa partie d'extrémité, avec un élément de verrouillage (4) pour guider et verrouiller les fils transversaux (15) dans la position de soudage au moyen d'un élément de pointe (13), l'élément de verrouillage (4) étant articulé sur un support (11) sur la machine et relié audit support (11) par l'intermédiaire d'un ressort (12).

4. Machine automatique pour la fabrication de mailles métalliques électro-soudées selon la revendication 3, **caractérisé en ce que**
l'unité d'alimentation des fils transversaux (15) comprend des rouleaux d'alimentation de fil (10) qui coopèrent avec les guides (5) de maintien de fils et des disques de décharge de fil (6), lesdits guides (5) étant aptes à s'ouvrir pour alimenter les fils et pour qu'ils soient déchargés par l'intermédiaire des disques (6) sur la vis sans fin (7) sous-jacente respective.

5. Machine automatique pour la fabrication de mailles métalliques électro-soudées selon la revendication 4, **caractérisé en ce que**
entre l'unité d'alimentation des fils transversaux (15) et les disques de décharge (6) est installé un dispositif de coupe (9) adapté pour la découpe de longueur des fils transversaux (15) qui sont poussés par la vis sans fin (7) contre une plaque de butée (22) de la machine pour aligner lesdits fils transversaux.
